Europäisches Patentamt

European Patent Office

Office européen des brevets

(11) Publication number: **0 384 930**
**A1**

(12) **EUROPEAN PATENT APPLICATION**

(21) Application number: **89103664.2**

(22) Date of filing: **02.03.89**

(51) Int. Cl.⁵: **F16B 2/06, F16M 13/02, F21V 21/08**

(43) Date of publication of application:
**05.09.90 Bulletin 90/36**

(84) Designated Contracting States:
**AT BE CH DE ES FR GB IT LI NL SE**

(71) Applicant: **SIS KONTORINVENTAR a/s**
**Skovgardsvej 23**
**DK-3200 Helsinge(DK)**

(72) Inventor: **Brochmann, Ole**
**Stentevej 2**
**DK-3210 Vejby(DK)**

(74) Representative: **Patentanwälte Grünecker,**
**Kinkeldey, Stockmair & Partner**
**Maximilianstrasse 58**
**D-8000 München 22(DE)**

(54) **A clamping device for fastening an article, such as a lamp or a support for a computer terminal, to an edge of a table top or board.**

(57) A clamping device (10) for fastening an article, such as a lamp or a support for a computer terminal, comprises a frame member (11) having surfaces engaging with the upper surface of a table top (15). A pair of arms (18) are swingably mounted around a stud or shaft (16) extending downwards from the frame member (11). Screw members (21) mounted at the free ends (23) of the arms (18) and provided with replaceable abutment members (24) at their free ends may be screwed into engagement with the bottom surface of the table top (15). The arms (18) may be moved upwards along the shaft (16) by means of a nut member (19), and by adjusting the mutual angular position of the arms (18), the abutment members (24) may be placed in a suitable position at the bottom surface of the table top.

Fig. 1

## A clamping device for fastening an article, such as a lamp or a support for a computer terminal, to an edge of a table top or board

The known clamping devices for this purpose are formed like a cramp or clamp having co-extending upper and lower arms for receiving the edge of a table top therebetween. The upper arm defines an upper abutment surface which may be placed in engagement with the upper surface of the table top, while the upper end of a screw member mounted on the lower arm may be screwed upwards into engagement with the lower surface of the table top so as to releasably secure the clamping device to the edge of the table top.

Some table tops have a frame fastened to their underside very close to the circumference thereof so that the edge of the table top to be gripped by the clamping device is rather narrow. In such case the arms of the clamping device should have a length not exceeding the width of the rather narrow edge of the table top. Other table tops have a tapered or wedge-shaped edge portion. In that case the length of the arms of the clamping device should be sufficient to extend beyond this wedge-shaped edge portion. Consequently, a clamping device of the known type can be used only in connection with a certain type of table tops.

The present invention provides a clamping device of the type described above which may be used more universally than the known clamping devices.

Thus, the present invention provides a clamping device comprising upper and lower abutment means defining mutually spaced upper and lower abutment surfaces, respectively, for receiving the edge of the table top therebetween, and tightening means for moving the upper and lower abutment means in relation to each other so as to fasten the device to or release it from the table top, and the clamping device according to the invention is characterized in at least one pair of arms each mounted swingably around an axis extending transversely to said abutment surfaces, the upper or lower abutment means being positioned at the free ends of said pair of arms.

Because the abutment means adapted to engage with one or both of the opposite side surfaces of a table top or board are mounted on swingable arms, the position of the abutment means may be adjusted so that the same clamping device may be used for fastening a computer terminal support or another article to a relatively narrow edge portion of a table top extending from a frame, as well as to a table top having a tapered or wedge-shaped edge portion.

The arms in each pair may be swingably mounted around a pair of spaced, substantially parallel axes. In the preferred embodiment however, said pair of arms are mounted on a common stud or shaft, for example in a hinge-like manner.

Normally, the clamping device according to the invention is used for fastening an article, such as a lamp or a computer terminal support to a table top or another substantially horizontally arranged board or plate. This is the reason why terms as "upper surface", "lower surface", upper abutment surface" and "lower abutment surface" are used in the specification and claims of this application. These terms are, however, to be interpreted in a rather broad sense, because the clamping device according to the invention could also be used for fastening an article to an inclined and even to a vertically arranged table top, board or plate.

As indicated above, the lower as well as the upper abutment means may be mounted on a pair of swingable arms. However, normally the upper surface of a table top is a completely plane surface. Therefore, the clamping device according to the invention preferably comprises a frame member defining the upper abutment surface, said pair of arms being swingably mounted on said frame member and having the lower abutment means located at their free ends. Thus, the position of only the lower abutment means is adjustable so that the clamping device may be adapted to the peculiarities, such as frame members, sloping surface parts, etc., of the lower surface of the table top.

In the latter embodiment the common stud or shaft mentioned above may extend from the frame member substantially at right angles to the upper abutment surface. This means that the lower abutment means may be moved in a plane substantially parallel to the upper abutment surface by swinging said pair of arms about the longitudinal axis of the shaft or stud.

The arms may be mounted so as to be slidable along the stud or shaft, and the tightening means may comprise a nut member cooperating with a threaded free end portion of the stud or shaft. Thus, when the clamping device has been positioned on the edge of a table top so that an edge portion is received between the upper and lower abutment surfaces, the nut member may be tightened, whereby the arms are moved upwards along the stud or shaft so as to bring the lower abutment means into engagement with the lower surface of the table top.

This nut member may be the only tightening means. In the preferred embodiment, however, the tightening means further comprises a screw member extending through a threaded bore at the free end of each of said arms, the abutment means comprising abutment members arranged at the free ends of the screw members. The fastening of the clamping device to the table top may then be improved by tightening each of the screw members, whereby the abutment members arranged at the free upper ends of the screw members are pressed into tight engagement with the lower surface of the table top. The said abutment members may be formed as an integral part of the screw members. In the preferred embodiment, however, the abutment members are replaceably mounted on the screw members, whereby the universality of the clamping device is improved. As an example, the replaceable abutment members may be of different sizes, so that a size suited for the table top in question may be chosen. Thus, the abutment members may comprise differently sized, dish-shaped members which may be nested into each other.

The article to be supported by the clamping device may be connected thereto in any suitable manner. Normally, however, a swingable connection is desired, and in that case the article may be mounted swingably around a stud member, which extends upwards from the frame member.

The invention will now be further described with reference to the drawings wherein

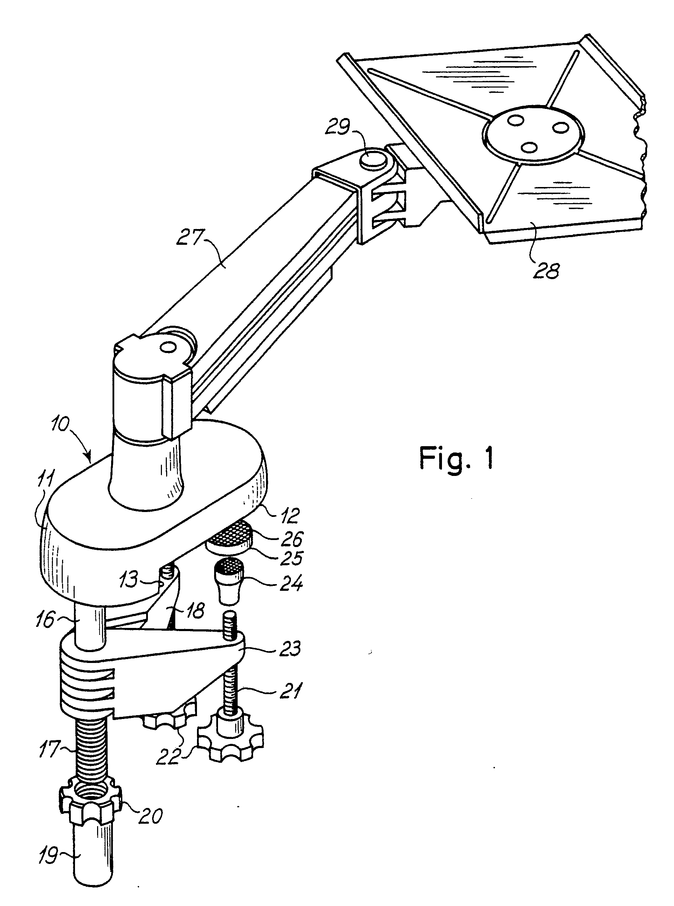

Fig. 1 is a perspective view of a clamping device according to the invention having a tray for supporting a computer terminal swingably mounted thereon,

Fig. 2 is a perspective view of the clamping device shown in Fig. 1 fastened to a table top having a wedge-shaped edge portion, and

Fig. 3 is a perspective view showing the clamping device fastened to a table top having a narrow edge portion extending outwards from a table frame.

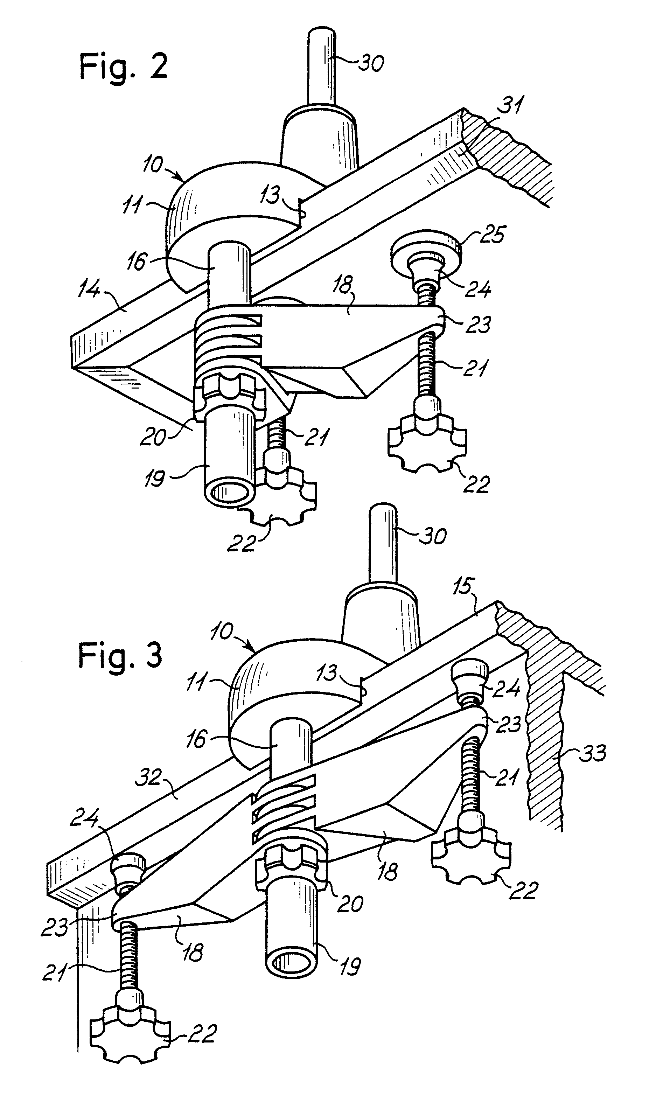

The clamping device 10 shown in the drawings comprises a frame member 11 having a lower side defining an upper abutment surface 12 and an abutment shoulder 13 which are adapted to engage with the upper surface and the end surface, respectively, of a table top 14 and 15 as shown in Figs. 2 and 3. One end of a stud or shaft 16 extending downwards substantially at right angles to the abutment surface 12 is fastened to the lower side of the frame member 11, and the stud or shaft 16 has a threaded free end 17.

The clamping device 10 further comprises a pair of arms 18 having interengaging ends with a through-going bore receiving the stud or shaft 16, so that said pair of arms may slide freely along the stud or shaft. A nut member 19 having a flange-like handling knob 20 may be screwed onto the threaded free end 17 of the stud or shaft 16, whereby the arms 18 may be moved along the shaft. A screw member 21 having a handling knob 22 extends through a threaded bore formed at the free end 23 of each of the arms 18. A ferrule-like, small diameter abutment member 24 may be mounted on the free end of each of the screw members 21, and a large diameter abutment member 25 having a recess formed in its bottom surface for receiving the upper end of the small diameter abutment member 24 may be mounted on the last-mentioned abutment member. An upper knurled surface of the abutment members 24 and 25 may define a lower abutment surface 26.

A supporting arm 27 carrying a tray or table 28 through a joint 29 is mounted swingably around a pivot or stud 30 extending upwards from the upper side of the frame member 11. The tray or table 28 may, for example, be used for supporting a computer terminal, a typewriter, or any other apparatus or item. It should be understood that the clamping device 10 could also be used for fastening any other article, such as a lamp, to a table top or board as will be described in the following.

When the clamping device 10 is to be fastened to a table top 14 of the type having a wedge-shaped edge portion 31 as shown in Fig. 2, it is important that the abutment members 25 do not engage with the sloping lower surface parts of the table top 14. Therefore, before the nut member 19 and the screw members 21 are tightened, the arms 18 are swung into a position in which the abutment members 25 are placed in engagement with the bottom surface of the table top 14 beyond the wedge-shaped edge portion 31. Now, the arms 18 may be moved upwards by tightening the nut member 19 till at least one of the abutment members 25 comes into engagement with the bottom surface of the table top 14, and thereafter, each of the screw members 21 may be tightened so that the table top 14 is securely gripped between the upper abutment surface 12 and the lower abutment surfaces 26, while the abutment shoulder 13 is in engagement with the end surface of the table top 14.

Fig. 3 shows a table top 15 having a rather narrow edge portion 32 extending outwards from a frame 33 which is fastened to the bottom surface of the table top. In order to fasten the clamping device 10 to the table top 15 it is necessary to swing the arms 18 into a position in which they define an angle between them of almost 180°. Furthermore, because the diameter of the abutment members 25 exceeds the width of the edge portion 32, it is necessary to remove the abutment members 25 from the screw members 21 so that the small diameter abutment members 24 are used. Now, the nut member may be tightened so as to move the abutment members 24 into engagement with the bottom surface of the edge portion 32, and thereafter each of the screw members 21 may be tightened so as to securely fasten the clamping device 10 to the table top 15.

It should be understood that various amendments and modifications of the embodiment shown in the drawings could be made without departing from the scope of the present invention. As an example, the screw members 21 could be dispensed with because the lower abutment surfaces could be defined by the free ends of the arms 18. Furthermore, the abutment members 24 and 25 could be swingably mounted in any other manner, for example around substantially parallel, mutually spaced axes.

**Claims**

1. A clamping device for fastening an article (27-29) to an edge (31, 32) of a table top (14, 15) or board, said device comprising upper (11) and lower (24, 25) abutment means defining mutually spaced upper (12) and lower (26) abutment surfaces, respectively, for receiving the edge of the table top therebetween, and tightening means (19, 21) for moving the upper and lower abutment means in relation to each other so as to fasten the device to or release it from the table top (14, 15), **characterized** in at least one pair of arms (18), each mounted swingably around an axis extending transversely to said abutment surfaces (12, 26), the upper (11) or lower abutment means (24, 25) being positioned at the free ends (23) of said pair of arms (18).

2. A clamping device according to claim 1, **characterized** in that said pair of arms (18) are mounted on a common stud or shaft (16).

3. A clamping device according to claim 1 or 2, **characterized** by comprising a frame member (11) defining the upper abutment surface (12), said pair of arms (18) being swingably mounted on said frame member (11) and having the lower abutment means (24, 25) located at their free ends (23).

4. A clamping device according to claims 2 and 3, **characterized** in that the common stud or shaft (16) extends from the frame member (11) substantially at right angles to the upper abutment surface (12).

5. A clamping device according to any of the claims 2-4, **characterized** in that the arms (18) are mounted slidably along the stud or shaft (16), the tightening means comprising a nut member (19) co-operating with a threaded free end portion (17) of the stud or shaft (16).

6. A clamping device according to any of the claims 1-5, **characterized** in that the tightening means comprises a screw member (21) extending through a threaded bore at the free end (23) of ear of said arms (18), the abutment means comprising abutment members (24, 25) arranged at the free ends of the screw members (21).

7. A clamping device according to claim 6, **characterized** in that the abutment members (24, 25) are replaceably mounted on said screw members (21).

8. A clamping device according to claim 7, **characterized** in that the abutment members comprise differently sized, dish-shaped members (24, 25), which may be nested into each other.

9. A clamping device according to any of the claims 3-8 **characterized** by a pivot or stud member (30) extending upwards from said frame member (11) for swingably mounting said article (27-29) to the clamping device (10).

10. A clamping device according to any of the claims 3-9, **characterized** in that said article is a swingable tray or table (27-29) for supporting a computer terminal.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 220 214 (CLOUTIER) <br> * Figures 1-6; page 1, lines 22-25 * <br> --- | 1,2,4,5 ,9 | F 16 B 2/06 <br> F 16 M 13/02 <br> F 21 V 21/08 |
| A | US-A-1 588 914 (SMITH) <br> * Figures 2,4; page 1, lines 51-60 * <br> --- | 1,2,6,9 | |
| A | US-A-4 569 498 (ERMANSKI) <br> * Figures 1,2,5; column 2, lines 11-23; column 3, lines 28-35 * <br> --- | 1,6 | |
| A | US-A-2 366 350 (OSTLING) <br> * Figures 1,2; column 1, line 27 - column 2, line 7 * <br> --- | 1-3,6 | |
| A | US-A-4 768 744 (LEEDS) <br> * Figures 1,2,5; abstract * <br> --- | 1,10 | |
| A | EP-A-0 230 236 (WELLA AG) <br> * Figures 15,24; column 6, lines 39-44; column 7, line 50 - column 8, line 8 * <br> --- | 1,10 | |
| A | US-A-4 691 907 (TAI-HER YANG) <br> ----- | | TECHNICAL FIELDS SEARCHED (Int. Cl.5) <br><br> A 47 B <br> B 25 B <br> F 16 B <br> F 16 M <br> F 21 V |

The present search report has been drawn up for all claims

| Place of search | Date of completion of the search | Examiner |
|---|---|---|
| THE HAGUE | 12-10-1989 | PESCHEL W. |